# EUROPEAN PATENT SPECIFICATION

(11) **EP 2 557 130 B1**
(45) Date of publication and mention of the grant of the patent: **28.09.2016**
(21) Application number: 11766154.6
(22) Date of filing: 06.04.2011
(51) Int. Cl.: C09D 5/00, C09D 7/12, C09D 201/00, B05D 5/00, G02B 1/11

(54) **ANTIREFLECTIVE COATING COMPOSITION, ANTIREFLECTIVE FILM, AND PREPARATION METHOD THEREOF**
ANTIREFLEKTIVE BESCHICHTUNGSZUSAMMENSETZUNG, ANTIREFLEKTIVER FILM UND HERSTELLUNGSVERFAHREN DAFÜR
COMPOSITION DE REVÊTEMENT ANTIREFLET, FILM ANTIREFLET, ET PROCÉDÉ DE PRÉPARATION ASSOCIÉ

(30) Priority: 05.04.2011 KR 20110031168; 06.04.2010 KR 20100031467
(43) Date of publication of application: 13.02.2013
(73) Proprietor: LG Chem, Ltd., Youngdungpo-gu Seoul 150-721 (KR)
(72) Inventor: KIM, Heon, Daejeon 305-770 (KR); CHANG, Yeong-Rae, Daejeon 302-120 (KR); JUNG, Soon-Hwa, Daejeon 305-755 (KR); PARK, Jin-Young, Daejeon 302-828 (KR); KIM, Boo-Kyung, Yuseong-gu, Daejon 305-380 (KR)
(74) Representative: Goddar, Heinz J.
(86) International application number: PCT/KR2011/002415
(87) International publication number: WO 2011/126303

(56) References cited:
- WO-A2-2009/064127
- JP-A- 2009 198 748
- JP-A- 2010 196 043
- KR-A- 20060 111 622
- KR-A- 20090 049 558
- KR-A- 20090 119 968
- US-A1- 2009 232 977

## Description

### [TECHNICAL FIELD]

This disclosure relates to an anti-reflective coating composition, an anti-reflection film and a method for manufacturing the same.

### [BACKGROUND OF ART]

In general, a display device such as PDP, CRT, and LCD, is equipped with an anti-reflection film (or an anti-glare film) for minimizing reflection of light entering the screen from outside.

In the existing anti-reflection film, an anti-reflection layer is predominantly disposed on a light-transmitting base, and an anti-reflection layer with a triple-layered structure wherein a hard coat layer, a high refractive index layer with a thickness of 1 *µ*m or more, and a low refractive index layer are sequentially deposited is widely used (for example, Japanese Laid-open Patent Publication No. 2002-200690)

Recently, to simplify the manufacturing process, the high refractive index layer is skipped in the anti-reflection layer, and double-layered structures wherein a hard coat layer and a low refractive index layer are deposited are commonly used. (for example, Japanese Laid-open Patent Publication No. 2000-233467).

Further, to combine both anti-glare property and scratch resistance, an anti-reflection film equipped with an anti-glare had coat layer is used. In this regard, a technology of coexisting anti-glare property and light-transmittance by controlling the thickness of the anti-glare hard coat layer to 50∼90% of the average particle diameter of light-transmitting particles for forming a mat has been suggested (for example, Japanese Laid-open Patent Publication No. 8-309910).

Meanwhile, an anti-reflection film is generally manufactured by a dry method or a wet method.

According to the dry method, material having low refractive index (for example, MgF₂ and SiO₂) is deposited on a base film as a thin film by deposition or sputtering, or material having high refractive index (for example, ITO (tin doped indium oxide), ATO (tin doped antimony oxide), ZnO and TiO₂) and material having low refractive index are alternatively deposited. Although the dry method may manufacture an anti-reflection film having strong interfacial adhesion, it is not commercially widely used due to the high manufacture cost.

Meanwhile, according to the wet method, a coating composition comprising polymer resin, and, an organic solvent is coated on a base film, dried and cured. And, the wet method is widely commercially used due to relatively low manufacture cost compared to the dry method.

However, since the wet method should separately conduct processes of forming each layer of a hard coat layer, a high refractive index layer and a low refractive index layer, included in the anti-reflection film, the manufacturing process is complicated, and interfacial adhesion is weak.

Thus, studies are actively progressed on an anti-reflective coating composition capable of forming 2 or more layers by single wet coating.

However, since phase separation is not smoothly achieved by coating of a composition, many problems including deteriorated function as each layer still exist.

WO 2009/064127 A2 discloses a coating composition for anti-reflection, comprising a) a low refractive material having a refractive index of 1.2 to 1.45, b) a high refractive material having a refractive index of 1.55 to 2.2 and comprising high refractive fine particles and an organic substituent, wherein the difference in the surface energy between two materials is 5 mN/m or more.

JP 2010-196043 A discloses a coating composition including organic solvent and two or more kinds of inorganic particles, wherein at least one of inorganic particles in the two or more kinds of inorganic particles is inorganic particles which are surface-treated with a fluorine compound A, and further the pH of the coating composition is ≥3 to ≤6.

### [DISCLOSURE OF INVENTION]

### [Technical Problem]

Accordingly, the present invention provides an anti-reflective coating composition that may be smoothly phase-separated into at least two layers only by single coating process.

The present invention also provides an anti-reflection film manufactured using the above composition.

The present invention also provides a method for manufacturing an anti-reflection film by a more simplified process using the above composition.

### [Technical Solution]

According to the present invention, provided is an anti-reflective coating composition comprising hollow particles, hollow particles coated with a fluorine-based compound having refractive index of 1.3∼1.4 and surface tension of 10∼25 mN/m on the surface, measured with reference to water and diiodide methane (CH212), measuring device KRUSS Co, drop shape analysis DSA100, on the surface, wherein the fluorine-based compound coated on the surface of the hollow particle is at least one compound selected from the group consisting of tridecafluorooctyl triethoxy silane, heptadecafluorodecyl trimethoxy silane and hetadecafluorodecyl triisopropoxy silane, a photopolymerizable compound, a photopolymerization initiator, and a solvent.

The anti-reflective coating composition may comprise 1 to 20 parts by weight of the hollow particles; 1 to 60 parts by weight of the hollow particles coated with the fluorine-based compound on the surface; 1 to 20 parts by weight of the photopolymerization initiator; and 100 to 500 parts by weight of the solvent, based on 100 parts by weight of the photopolymerizable compound.

The weight ratio of the hollow particles coated with a fluorine-based compound on the surface to the hollow particles may be 1:0.1∼20.

And, the number average particle diameter of the hollow particles and the hollow particles coated with a fluorine-based compound on the surface may be 1 to 200 nm.

And, the solvent may have a dielectric constant (25°C) of 20 ∼ 30 and a dipole moment of 1.7∼2.8.

Preferably, the solvent may be at least one selected from the group consisting of methylethylketone, ethylacetate, acetyl acetone, isobutylketone, methanol, ethanol, n-butanol, i-butanol, and t-butanol.

Meanwhile, according to the present invention, provided is an anti-reflection film comprising a base film, and a hard coat layer and a low reflective index layer formed on the base film by the anti-reflective coating composition according to the present invention, wherein the low reflective index layer comprises hollow particles and hollow particles coated with a fluorine-based compound having reflective index of 1.3∼1.4 and surface tension of 10∼25 mN/m on the surface, and the hollow particles coated with a fluorine-based compound on the surface have a distribution gradient in a film thickness direction.

The distribution gradient of the hollow particles may increase in a direction away from the base film.

Meanwhile, according to the present invention, provided is a method for manufacturing an anti-reflection film comprising preparing the above anti-reflective coating composition; coating the composition on at least one side of the base film; drying the coated composition; and curing the dried composition.

The drying may be conducted while the composition coated on the base film is phase-separated into one or more layers according to the distribution gradient of the hollow particles.

And, the drying may be conducted at a temperature of from 5 to 150 °C for 0.1 to 60 minutes.

And, the curing may be conducted by heat curing by heat treatment at a temperature of from 20 to 150 °C for 1 to 100 minutes, or by UV curing by UV irradiation at UV irradiation amount of 0.1 to 2 J/cm² for 1 to 600 seconds.

### [ADVANTAGEOUS EFFECTS]

In the anti-reflective coating composition of the present invention, at least two layers may be spontaneously formed only by single coating due to smooth phase separation in the coating layer. Particularly, since an interface of each layer formed by phase separation is substantially chemically bonded or crosslinked, delamination of each layer may be minimized. And, a film with excellent scratch resistance and anti-reflection may be manufactured by a more simplified method using the anti-reflective coating composition of the present invention.

### [BEST MODE FOR CARRYING OUT THE INVENTION]

Hereinafter, an anti-reflective coating composition, an anti-reflection film, and a method for manufacturing the same according to the embodiments of the invention will be explained.

The terms used herein are defined as follows, unless otherwise described.

The term 'hollow particles' refers to organic or inorganic particles in which a hollow space exists. The description 'hollow particles coated with a fluorine-based compound on the surface' means that the surface of the hollow particle is treated with a fluorine-based compound, and the description 'hollow particles' means that the surface is not coated.

And, the 'surface energy' refers to a potential energy for minimizing free surface area, and 'surface tension' is defined as a surface energy per a unit surface area. Thus, the surface tension and the surface energy indicate the degree of minimizing the surface, which are indicators of the same or equivalent physical properties.

And, the term '(meth)acrylate' commonly designates acrylate or methacrylate.

And, the term 'coating layer' refers to a coating layer formed by coating the anti-reflective coating composition of the present invention on a base film.

And, the term 'phase separation' means that a gradient is formed for the distribution of a specific ingredient included in the composition according to difference in the density, surface tension or other physical properties of the ingredient. If the coating layer is phase separated, it may be divided into at least two layers according to the distribution of a specific ingredient, for example, the distribution of one of the hollow particles or the hollow particles coated with fluorine-based compound on the surface.

And, the 'hard coat layer' or 'high refractive index layer' refers to a layer that has relatively high refractive index with reference to the low refractive index layer, and is positioned lower than the low refractive index layer based on the distance from the base film (lower coating layer), wherein one of the hollow particle or the hollow particle coated with a fluorine-based compound on the surface is not substantially distributed. The description that the hollow particle is not substantially distributed means that the hollow particles or the hollow particles coated with a fluorine-based compound on the surface are included in an amount of less than 1 wt%.

And, the 'low refractive index layer' refers to a layer that has relatively low refractive index with reference to the above mentioned hard coat layer or a high refractive index layer, and is positioned upper than the hard coat layer or high refractive index layer based on the distance from the base film (upper coating layer), wherein the hollow particles are distributed.

Meanwhile, during the studies on the anti-reflective coating composition, the inventors confirmed that if hollow particles coated with a fluorine-based compound satisfying specific properties are added, phase separation may smoothly occur in the coating layer of the composition only by single coating, and thus an anti-reflection film may be manufactured by a simplified method, and completed the invention.

Specifically, in the prior art, to form an anti-reflection film, compositions for forming a hard coat layer, a high refractive index layer, and a low refractive index layer, are respectively prepared, and a process of coating on a base film and curing is repeated. However, this method has low productivity due to complicated manufacturing process, and each layer may be easily delaminated during use due to weak interfacial adhesion.

Since the composition for anti-reflection film according to the present invention comprises hollow particles coated with a fluorine-based compound satisfying specific properties, phase separation may smoothly occur after coating the composition on a base film, and thus an anti-reflection coating film may be manufactured by a more simplified method, and delamination may be minimized.

According to one embodiment of the present invention, provided is an anti-reflective coating composition comprising hollow particles, hollow particles coated with a fluorine-based compound having refractive index of 1.3∼1.4 and surface tension of 10∼25 mN/m on the surface, a photopolymerizable compound, a photopolymerization initiator, and a aolvent as defined.

Specifically, since the hollow particles included in the composition of the present invention is coated with a fluorine-based compound satisfying the above physical properties, it may manifest sufficient anti-reflection effect due to the uniform surface. Moreover, since the surface-coated hollow particles have lower surface energy than common hollow particles (hollow particles that are not surface-coated), surface energy difference from the material forming a high refractive index layer in the composition (for example, UV curable resin) may become larger. Thereby, the surface-coated hollow particles may be more smoothly phase-separated, and reflectivity of the surface may be further lowered.

Namely, since common hollow particles do not have large surface energy difference from the material forming a high refractive index layer, it may not have sufficient phase-separation effect, and has a limitation in lowering reflectivity due to the non-uniform surface. However, the present invention may overcome the above problem by introducing the hollow particles coated with a fluorine-based compound.

The hollow particles may be inorganic or organic particles, preferably inorganic particles mainly composed of silica. The hollow silica is more favorable for lowering reflectivity of the obtained film.

The particle diameter of the hollow particles may be determined within the range capable of maintaining transparency of the film and exhibiting anti-reflection effect. According to the present invention, the number average particle diameter of the hollow particles may be 1 to 200 nm, preferably 5 to 100 nm, more preferably 5 to 80 nm.

And, the shape of the hollow particle may be preferably spherical, but it may be amorphous.

Further, the hollow particles may be dispersed in a dispersion medium (water or an organic solvent), and may be colloidal hollow particles having solid content of 5 to 40 wt%. The organic solvent that can be used as the dispersion medium may include alcohol such as methanol, isoproply alcohol (IPA), ethylene glycol and butanol; ketone such a methyl ethyl ketone and methyl iso butyl ketone (MIBK); aromatic hydrocarbon such a toluene and xylene; amide such as dimethyl formamide, dimethyl acetamide, N-methyl pyrrolidone; ester such as ethyl acetate, butyl acetate, and γ-butyrolactone; ether such as tetrahydrofuran, and 1,4-dioxane; and a combination thereof.

Meanwhile, the fluorine-based compound that is used for surface coating of the hollow particles may have refractive index of 1.3∼1.4, preferably 1.31∼1.4, more preferably 1.31∼1.39. In order to manifest minimum anti-reflection effect required in the present invention, the fluorine-based compound may preferably have refractive index within the above range.

And, the fluorine-based compound may have surface tension of 10∼25 mN/m, preferably 12∼25 mN/m, more preferably 12∼23 mN/m.

Specifically, in order that the hollow particles may manifest sufficient compatibility in the composition of the present invention, the fluorine-based compound may preferably have surface tension of 10 mN/m or more. And, in order to manifest minimum phase separation effect required in the present invention, the fluorine-based compound may preferably have surface tension of 25 mN/m or less.

The fluorine-based compound is at least one selected from the group consisting of tridecafluorooctyl triethoxysilane, hetadecafluorodecyl trimethoxysilane, and hetadecafluorodecyl triisopropoxy silane.

Further, in order that the surface coating of the hollow particles may be efficiently achieved, non-fluorine based silane compound such as tetraethoxysilane may be mixed and used in addition to the fluorine-based compound. If the non-fluorine based silane compound is mixed and used, the content of the non-fluorine-based silane compound may be 20 wt% or more, preferably 25 wt% or more, more preferably 30 wt% or more of the total silane compound. Thereby, sufficient phase separation effect of the hollow particles may be obtained.

Meanwhile, a method of coating the fluorine-based compound on the surface of the hollow particles may include a method of hydrolyzing and condensing the hollow particles and the fluorine-based compound by a sol-gel reaction in the presence of water and a catalyst.

The sol-gel reaction for preparing the hollow particles coated with the fluorine-based compound may be conducted by a commonly known method. In the present invention, the sol-gel reaction may be conducted at a reaction temperature of from 0 to 150 °C for 1 to 72 hours, preferably 0 to 100 °C for 1 to 60 hours, more preferably 25 to 70 °C for 1 to 48 hours.

A catalyst used in the sol-gel reaction may control the reaction time of the sol-gel reaction, and preferably, it may include an acid such as nitric acid, hydrochloric acid, acetic acid and oxalic acid; more preferably, hydrochloric acid salt, nitric acid salt, sulfuric acid salt and acetic acid salt together with zirconium and indium salt.

The content of the catalyst may be 0.01 to 10 parts by weight, preferably 0.05 to 9 parts by weight, more preferably 0.1 to 8 parts by weight, based on 100 parts by weight of the fluorine-based compound (if the fluorine-based compound and the non-fluorine based silane compound are mixed and used, based on the content of the mixture).

And, water is used in the sol-gel reaction for the hydrolysis reaction and condensation reaction, and it may be used in an amount of 0.01 to 100 parts by weight, preferably 0.1 to 80 parts by weight, more preferably 0.1 to 60 parts by weight, based on 100 parts by weight of the fluorine-based compound.

Further, in the sol-gel reaction, an organic solvent for controlling molecular weight of the hydrolyzed condensed product may be used, and it may preferably include alcohol, cellosolve, ketone, and a mixture thereof. The content of the organic solvent may be 0.1 to 200 parts by weight, preferably 0.1 to 150 parts by weight, more preferably 0.1 to 120 parts by weight, based on 100 parts by weight of the fluorine-based compound.

Further, in the sol-gel reaction, the content of the composition comprising the fluorine-based compound, catalyst, water and organic solvent may be 5 to 30 parts by weight, preferably 10 to 30 parts by weight, more preferably 10 to 25 parts by weight, based on 100 parts by weight of the hollow silica. Thereby, surface coating of the hollow particles may be sufficiently achieved.

The anti-reflective coating composition of the present invention further comprises common hollow particles that are not coated with a fluorine-based compound on the surface, a photopolymerizable compound, a photopolymerization initiator, and a solvent in addition to the hollow particles coated with the above described fluorine-based compound on the surface.

The anti-reflective coating composition of the present invention, if coated on a predetermined base film, may exist in the state wherein the hollow particles and the hollow particles coated with the fluorine-based compound are dispersed in a matrix of the photopolymerizable compound.

The hollow particles and the hollow particles coated with the fluorine-based compound form a distribution gradient by surface energy difference from the photopolymerizable compound, and more specifically, the distribution gradient increases in a direction away from the base film (namely, the distribution rate of the hollow particles increase toward a direction away from the base film).

Thereby, according to the anti-reflective coating composition of the present invention, phase separation may smoothly occur in the coating layer and thus, at least two layers may be spontaneously formed only by single coating.

Hereinafter, each ingredient that may be included in the composition of the present invention will be described.

First, the photopolymerizable compound is an ingredient which is cured by photopolymerization to function as a binder.

As the photopolymerizable compound, those commonly used in the formation of a film may be used, and the construction is not specifically limited. Preferably, the photopolymerizable compound may include a (meth)acrylate compound such as (meth)acrylate monomer, urethane (meth)acrylate oligomer, epoxy, (meth)acrylate oligomer, ester (meth)acrylate oligomer, and a combination thereof.

Further, to form a hard coat layer having higher refractive index, a (meth)acrylate compound including aromatics or substituents such as sulfur, chlorine, metal may be used. Examples of the (meth)acrylate compound including aromatics or substituents may include dipentaerythritol hexa(meth)acrylate, pentaerythritol tri/tetra (meth)acrylate, trimethylenepropane tri(meth)acrylate, ethyleneglycol di(meth)acrylate, 9,9-bis(4-(2-acryloxyethoxyphenyl)fluorine (refractive index 1.62), bis(4-methacryloxythiophenyl)sulfide (refractive index 1.689), bis(4-vinylthiophenyl)sulfide (refractive index 1.695), and a combination thereof.

And, the photopolymerization initiator is a compound that may be decomposed by UV, and it may preferably include 1-hydroxy cyclohexylphenyl ketone, benzyl dimethyl ketal, hydroxydimethylaceto phenone, benzoin, benzoin methyl ether, benzoin ethyl ether, benzoin isopropyl ether, and benzoin butyl ether.

The content of the photopolymerization initiator may be 1 to 20 parts by weight, preferably 1 to 15 parts by weight, more preferably 5 to 15 parts by weight, based on 100 parts by weight of the photopolymerizable compound. Specifically, in order to sufficiently progress the polymerization reaction of the photopolymerizable compound, the content of the photopolymerization initiator may be preferably 1 part by weight or more, based on 100 parts by weight of the photopolymerizable compound. And, if the photopolymerization initiator is added in an excessive amount, mechanical properties such as scratch resistance and abrasion resistance of the anti-reflective coating layer may be deteriorated, and in order to prevent this, the content of the photopolymerization initiator may be preferably 20 parts by weight or less, based on 100 parts by weight of the photopolymerizable compound.

Meanwhile, hollow particles are included in the anti-reflective coating composition, which are a mixture of hollow particles that are not surface-coated with a fluorine-based compound and hollow particles that are surface-coated with a fluorine-based compound.

The hollow particles that are surface-coated with a fluorine-based compound are as explained above. And, the hollow particles that are non surface-coated with a fluorine-based compound are the same as the above explained hollow particles, except that they are not coated. Specifically, the hollow particles may be inorganic or organic particles, and preferably inorganic particles including silica as a main ingredient for lowering reflectivity of the film. And, the particle diameter of the hollow particles may be determined within the range capable of exhibiting anti-reflection effect while maintaining transparency of the film. According to the present invention, the hollow particles may have number average particle diameter of 1 to 200 nm, preferably 5 to 100 nm, more preferably 5 to 80 nm. And, shape of the hollow particles may be preferably spherical, but it may be amorphous.

The content of the hollow particles (hollow particles that are not surface-coated with a fluorine-based compound) is 1 to 20 parts by weight, preferably 1 to 15 parts by weight, more preferably 5 to 15 parts by weight, based on 100 parts by weight of the photopolymerizable compound.

The content of the hollow particles that are surface-coated with a fluorine-based compound is 1 to 60 parts by weight, preferably 1 to 50 parts by weight, more preferably 5 to 40 parts by weight, based on 100 parts by weight of the photopolymerizable compound.

Namely, to prevent reduction in anti-reflection effect due to increase in reflectivity resulting from adding excessive amount while exhibiting minimum anti-reflection effect required in the composition of the present invention, the hollow particles and the hollow particles coated with the fluorine-based compound may be respectively included in the above content ranges.

Specifically, the hollow particles have different surface energy according to surface coating with the fluorine-based compound, and thus, different phase separation effect in the composition. Considering this, the weight ratio of the hollow particles coated with the fluorine-based compound to the hollow particles may be controlled to 1:0.1∼20, preferably 1:0.5∼15, more preferably 1:1∼10. Thus, the hollow particles coated with the fluorine-based compound may be preferably included in an amount of 50 wt% or more of the total weight of the hollow particles included in the composition for smooth phase separation and realization of anti-reflection effect.

Meanwhile, the solvent may be included in the composition of the present invention.

Specifically, as the solvent, those which do not influence on the whole properties of the composition may be used; and preferably, a solvent having a dielectric constant(25°C) of 20 ∼ 30 and a dipole moment of 1.7 ∼ 2.8 may be favorable in terms of smooth phase separation of the composition.

The solvent satisfying the above properties may include methylethylketone, ethylacetate, and acetylacetone.

In addition to the solvent satisfying the above properties, at least one common solvent selected from the group consisting of isobutylketone, methanol, ethanol, n-butanol, i-butanol, and t-butanol may be further included. However, the solvent satisfying the above dielectric constant and dipole moment ranges may be preferably included in an amount of 60 wt% or more of the total weight of the solvent for smooth phase separation of the hollow particles.

The solvent may be included in an amount of 100 to 500 parts by weight, preferably 100 to 450 parts by weight, more preferably 100 to 400 parts by weight, based on 100 parts by weight of the photopolymerizable compound. Specifically, if flowability is not good during coating of the composition, defect such as stripes in the film may be generated, and thus, in order to give minimum flowability required in the composition, the solvent may be preferably included in an amount of 100 parts by weight or more, based on 100 parts by weight of the photopolymerizable compound. And, if the solvent is added in an excessive amount, solid contents may be too lowered to generate defects during drying and curing, and thus, in order to prevent this, the solvent may be preferably included in an amount of 500 parts by weight or less.

Meanwhile, the anti-reflective coating composition of the present invention may further include inorganic particles. The inorganic particles may be distributed in the hard coat layer and the first-half part of the low refractive index layer during curing and drying of the composition, and further increase strength of the coating layer to improve scratch resistance.

The inorganic particles may include those commonly used in the art, and preferably, silica particles. The inorganic particles, unlike the hollow particles, may not necessarily be hollow, and it may be amorphous.

The particle diameter of the inorganic particles may be determined considering compatibility with a solvent, light transmittance and haze property, and preferably, the inorganic particles may have number average particle diameter of 1 to 50 nm.

In addition to the above mentioned ingredients, the anti-reflective coating composition of the present invention may further include commonly used additives. For example, additive such as an antistatic agent, an antioxidant, a UV-stabilizer and a surfactant may be further included in the composition of the present invention according to the properties to be further given to the film. The content of the additives may be determined within the range that does not deteriorate properties of the composition.

Meanwhile, according to another embodiment of the invention, provided is an anti-reflection film comprising
a base film, and a hard coat layer and a low reflective index layer formed on the base film by the anti-reflective coating composition of the present invention,
wherein the low reflective index layer comprises hollow particles coated with a fluorine-based compound having reflective index of 1.3∼1.4 and surface tension of 10∼25 mN/m on the surface, and
the hollow particles coated with a fluorine-based compound on the surface have distribution gradient in a film thickness direction.

The anti-reflection film is manufactured using the above explained anti-reflective coating composition, wherein the hollow particles coated with the fluorine-based compound on the surface have distribution gradient in a film thickness direction according to difference in surface energy, and preferably the distribution gradient increases in a direction away from the base film.

Thereby, the anti-reflection film according to the present invention may have excellent anti-reflection effect and scratch resistance.

Meanwhile, according to another embodiment of the invention, provided is a method for manufacturing an anti-reflection film comprising
preparing the above explained anti-reflective coating composition;
coating the composition on at least one side of the base film;
drying the coated composition; and
curing the dried composition.

Since the method for manufacturing an anti-reflection film according to the present invention uses a composition including hollow particles coated with a fluorine-based compound on the surface as an anti-reflective coating composition, phase separation may smoothly occur in the coating layer only by single coating, and thus an anti-reflection film with excellent scratch resistance may be manufactured by a simplified method.

The manufacturing method of the present invention may be conducted by a common wet coating method, except using the above explained anti-reflective coating composition.

First, the anti-reflective coating composition having the above explained construction is prepared, and the prepared composition is coated on at least one side of a base film.

As the base film, a commonly used transparent base film such as triacetate cellulose may be used. The method of coating the composition on the base film may be conducted using a common coating apparatus and method.

Next, the coated composition is dried.

During the drying, the coated composition is phase separated into a hard coat layer and a low refractive index layer from the base film according to the inclusion of the hollow particles coated with the fluorine-based compound on the surface. Specifically, the low refractive index layer includes hollow particles coated with the fluorine-based compound on the surface, and the phase separation of the composition is naturally achieved according to surface energy difference of the hollow particles over time. During this process, distribution rate of the hollow particles increases in a direction away from the base film.

After the coating, the composition may be allowed to stand under specific conditions to dry. To facilitate phase separation of the composition and achieve sufficient phase separation during the drying process, the drying may be conducted at a temperature of from 5 to 150 °C for 0.1 to 60 minutes. By passing the drying step, the composition may be phase separated into an upper coating layer (low refractive index layer) including hollow particles and a lower coating layer (hard coat layer) that does not substantially include hollow particles.

Subsequently, the dried composition layer is cured.

In the curing step, light is irradiated to the dried composition layer to initiate a polymerization reaction and thereby curing the composition layer, and it may be conducted under common photocure reaction conditions. However, to induce a sufficient cure reaction, the curing may be preferably conducted at a UV irradiation amount of 0.1 to 2 J/cm² for 1 to 600 seconds.

Meanwhile, the method for manufacturing an anti-reflection film of the present invention may further include commonly conducted steps before or after each step, in addition to the above explained steps.

Hereinafter, the present invention will be explained with reference to the following Examples.

### Preparation Example 1

### (Preparation of hollow particles coated with fluorine-containing alkoxysilane on the surface)

A silane compound including about 30 wt% of hetadecafluorodecyl trimethoxy silane (refractive index 1.331, surface tension 20.7 mN/m, measured with reference to water and diiodide methane(CH₂I₂), measuring device: KRUSS Co., Drop shape analysis DSA100^{®}) and about 70 wt% of tetraethoxy silane was prepared.

To the silane compound, about 26.97 parts by weight of water, about 3.256 parts by weight of a catalyst oxalic acid, about 116.28 parts by weight of an organic solvent ethanol were added, based on 100 parts by weight of the silane compound, to prepare a silane composition.

Subsequently, 100 parts by weight of hollow silica particles (number average particle diameter: 50 nm, manufactured by Catalysts & Chemicals Industries Co. Ltd, Product name: MIBK-sol^{®}) and about 15 parts by weight of the silane composition were mixed, and then, the mixture was subjected to a sol-gel reaction at a reaction temperature of 30°C for 24 hours to prepare hollow silica particles coated with fluorine-containing alkoxysilane on the surface.

### Comparative Preparation Example 1

### (Preparation of hollow particles coated with non fluorine-containing alkoxysilane on the surface)

Hollow silica particles coated with non fluorine-containing particles on the surface were prepared using the same conditions and method as Preparation Example 1, except using methacryloylpropyl trimethoxy silane (a silane compound including about 30 wt% of methacryloylpropyl trimethoxy silane and about 70 wt% of tetraethoxy silane) instead of hetadecafluorodecyl trimethoxy silane.

### Comparative Preparation Example 2

### (Preparation of hollow particles coated with non fluorine-containing alkoxysilane on the surface)

100 parts by weight of hollow silica particles (number average particle diameter: 50 nm, manufactured by Catalysts & Chemicals Industries Co. Ltd, Product name: MIBK-sol^{®}), about 6.67 parts by weight of methacryloylpropyl trimethoxy silane, about 1.45 parts by weight of water, about 0.17 parts by weight of a catalyst oxalic acid, and about 20.3 parts by weight of an organic solvent ethanol were mixed, and then, the mixture was subjected to a sol-gel reaction at a temperature of 30 °C for 24 hours to prepare hollow silica particles coated with non fluorine-containing alkoxysilane on the surface.

### Example 1

### (Preparation of anti-reflective coating composition)

Based on 100 parts by weight of petaerythritol hexaacrylate (PETA);
about 10.851 parts by weight of a photopolymerization initiator (specifically, about 1.111 parts by weight of Darocur-1173^{®}, about 6.481 parts by weight of Iragacure-184^{®}, and about 2.148 parts by weight of Iragacure-819^{®}, and about 1.111 parts by weight of Irgacure-907^{®});
about 251.852 parts by weight of a solvent (specifically, about 179.630 parts by weight of methylethylketone (MEK), about 24.074 parts by weight of ethanol, about 24.074 parts by weight of n-butylalcohol, and about 24.074 parts by weight of acetylacetone);
about 11.334 parts by weight of hollow silica particles (number average particle diameter: 50 nm, manufactured by Catalysts & Chemicals Industries Co. Ltd, Product name: MIBK-sol^{®}); and
about 22.669 parts by weight of the hollow silica particles coated with the fluorine-based compound on the surface according to the Preparation Example 1
were mixed to prepare an anti-reflective coating composition.

### (Manufacture of anti-reflection film)

The anti-reflective coating composition was coated on a triacetate cellulose film (thickness 80 *µ*m) using a wire bar (no. 9). It was dried in an oven of 90 °C for 1 minute, and then, UV energy of 200 mJ/cm² was irradiated for 5 seconds to cure the composition.

Thereby, a film including an anti-reflective coating layer of about 3 *µ*m (thickness of low refractive index layer including hollow silica and hollow silica coated with fluorine-based compound on the surface: about 0.12 *µ*m) was obtained.

At this time, a layer including hollow silica (low refractive index layer) and a layer that does not include hollow silica (hard coat layer) were distinctly divided.

### Example 2

### (Preparation of anti-reflective coating composition)

Based on 100 parts by weight of petaerythritol hexaacrylate (PETA);
about 10.851 parts by weight of a photopolymerization initiator (specifically, about 1.111 parts by weight of Darocur-1173^{®}, about 6.481 parts by weight of Iragacure-184^{®}, and about 2.148 parts by weight of Iragacure-819^{®}, and about 1.111 parts by weight of Irgacure-907®);
about 251.852 parts by weight of a solvent (specifically, about 179.630 parts by weight of methylethylketone (MEK), about 24.074 parts by weight of ethanol, about 24.074 parts by weight of n-butylalcohol, and about 24.074 parts by weight of acetylacetone);
about 24.61 parts by weight of hollow silica particles (number average particle diameter: 50 nm, manufactured by Catalysts & Chemicals Industries Co. Ltd, Product name: MIBK-sol^{®}); and
about 12.30 parts by weight of the hollow silica particles coated with the fluorine-based compound on the surface according to the Preparation Example 1
were mixed to prepare an anti-reflective coating composition.
(Manufacture of anti-reflection film)

A film including an anti-reflective coating layer of about 3 *µ*m (thickness of low refractive index layer including hollow silica and hollow silica coated with fluorine-based compound on the surface: about 0.12 *µ*m) was obtained using the same conditions and method as Example 1, except using the above prepared anti-reflective coating composition.

At this time, a layer including hollow silica (low refractive index layer) and a layer that does not include hollow silica (hard coat layer) were distinctly divided.

### Example 3

### (Preparation of anti-reflective coating composition)

Based on 100 parts by weight of petaerythritol hexaacrylate (PETA);
about 10.851 parts by weight of a photopolymerization initiator (specifically, about 1.111 parts by weight of Darocur-1173^{®}, about 6.481 parts by weight of Iragacure-184^{®}, and about 2.148 parts by weight of Iragacure-819^{®}, and about 1.111 parts by weight of Irgacure-907^{®});
about 251.852 parts by weight of a solvent (specifically, about 179.630 parts by weight of methylethylketone (MEK), about 24.074 parts by weight of ethanol, about 24.074 parts by weight of n-butylalcohol, and about 24.074 parts by weight of acetylacetone);
about 18.45 parts by weight of hollow silica particles (number average particle diameter: 50 nm, manufactured by Catalysts & Chemicals Industries Co. Ltd, Product name: MIBK-sol^{®}); and
about 18.45 parts by weight of the hollow silica particles coated with the fluorine-based compound on the surface according to the Preparation Example 1
were mixed to prepare an anti-reflective coating composition.

### (Manufacture of anti-reflection film)

A film including an anti-reflective coating layer of about 3 *µ*m (thickness of low refractive index layer including hollow silica and hollow silica coated with fluorine-based compound on the surface: about 0.12 *µ*m) was obtained using the same conditions and method as Example 1, except using the above prepared anti-reflective coating composition.

At this time, a layer including hollow silica (low refractive index layer) and a layer that does not include hollow silica (hard coat layer) were distinctly divided.

### Comparative Example 1

A composition with the same composition as Example 1 was prepared, except that hollow silica particles coated with the fluorine-based compound according to Preparation Example 1 were not added, and about 34.003 parts by weight of hollow silica particles (number average particle diameter: 50 nm, manufactured by Catalysts & Chemicals Industries Co. Ltd, Product name: MIBK-sol^{®}) that are not surface-coated were used. A film including an anti-reflective coating layer of about 3 *µ*m was obtained using the composition by the same conditions and method as Example 1.

### Comparative Example 2

A composition with the same composition as Example 1 was prepared, except that the hollow silica particles coated with non fluorine-based compound according to Comparative Preparation Example 1 was used instead of the hollow silica particles coated with fluorine-based compound according to Preparation Example 1, and a film including an anti-reflective coating layer of about 3 *µ*m was obtained using the composition by the same conditions and method as Example 1.

### Comparative Example 3

A composition with the same composition as Example 1 was prepared, except that the hollow silica particles coated with non fluorine-based compound according to Comparative Preparation Example 2 was used instead of the hollow silica particles coated with fluorine-based compound according to Preparation Example 1, and a film including an anti-reflective coating layer of about 3 *µ*m was obtained using the composition by the same conditions and method as Example 1.

### Experimental Example

The anti-reflection films manufactured in the Examples and Comparative Examples were evaluated, and the results are shown in Table 1.
1) Reflectivity evaluation: The back of the anti-reflection film was black-treated, and then, low reflection property was evaluated by minimum reflectivity value. As a measuring instrument, Solid Spec. 3700 spectrophotometer manufactured by Shimadzu Co. was used.
2) Transmittance and Haze evaluation: Transmittance and haze were evaluated using HR-100^{®} of Japan Murakami Co.
3) Scratch resistance evaluation: A steel wool with a load of 500 g/cm² was reciprocated 10 times at a speed of 24 m/min on the anti-reflection film, and then, the number of scratch with a length of 1 cm or more on the surface was examined. If the number of scratch with a length of 1 cm or more is less than 5, the anti-reflection film was evaluated as excellent (○); 5 or more and less than 15, average(Δ); and 15 or more, bad(X).

**[Table 1]**

| | Reflectivity (%) | Transmittance (%) | Haze (%) | Scratch resistance |
|---|---|---|---|---|
| Example 1 | 1.39 | 96.6 | 0.4 | ○ |
| Example 2 | 1.56 | 95.8 | 0.6 | ○ |
| Example 3 | 1.42 | 96.0 | 0.4 | ○ |
| Comparative Example 1 | 2.86 | 94.9 | 0.4 | Δ |
| Comparative Example 2 | 2.27 | 95.0 | 0.6 | Δ |
| Comparative Example 3 | 1.69 | 95.5 | 0.4 | Δ |

As shown in Table 1, the anti-reflection films of Examples 1-3 exhibit higher transmittance and lower reflectivity, and excellent scratch resistance, compared to the films of Comparative Example 1-3.

These results are considered to be derived from the fact that the anti-reflection films of Examples 1-3 have distribution gradient of the hollow particles coated with fluorine-base compound on the surface increasing in a direction away from the base film. Namely, it is considered that as the hollow particles coated with the fluorine-based compound on the surface are distributed more in a direction away from the base film, reflectivity of the surface is lowered and scratch resistance further improves.

## Claims

1. An anti-reflective coating composition comprising
hollow particles,
hollow particles coated with a fluorine-based compound having refractive index of 1.3∼1.4 and surface tension of 10∼25 mN/m on the surface. measured with reference to water and diiodide methane (CH₂I₂), measuring device KRUSS Co, drop shape analysis DSA100, on the surface, wherein the fluorine-based compound coated on the surface of the hollow particle is at least one compound selected from the group consisting of tridecafluorooctyl triethoxy silane, heptadecafluorodecyl trimethoxy silane and hetadecafluorodecyl triisopropoxy silane,
a photopolymerizable compound,
a photopolymerization initiator, and
a solvent.

2. The anti-reflective coating composition according to claim 1, wherein the composition comprises
1 to 20 parts by weight of the hollow particles;
1 to 60 parts by weight of the hollow particles coated with the fluorine-based compound on the surface;
1 to 20 parts by weight of the photopolymerization initiator; and
100 to 500 parts by weight of the solvent,
based on 100 parts by weight of the photopolymerizable compound.

3. The anti-reflective coating composition according to claim 1, wherein the weight ratio of the hollow particles coated with the fluorine-based compound on the surface to the hollow particles is 1: 0.1∼20.

4. The anti-reflective coating composition according to claim 1, wherein the number average particle diameter of the hollow particles and the hollow particles coated with the fluorine-based compound on the surface is 1 to 200 nm.

5. The anti-reflective coating composition according to claim 1, wherein the solvent has a dielectric constant (25°C) of 20 ∼ 30 and a dipole moment of 1.7 ∼ 2.8.

6. The anti-reflective coating composition according to claim 1, wherein the solvent is at least one selected from the group consisting of methylethylketone, ethylacetate, acetyl acetone, isobutylketone, methanol, ethanol, n-butanol, i-butanol, and t-butanol.

7. An anti-reflection film comprising
a base film, and a hard coat layer and a low reflective index layer formed on the base film by the anti-reflective coating composition according to claim 1,
wherein the low reflective index layer comprises hollow particles and hollow particles coated with a fluorine-based compound having reflective index of 1.3∼1.4 and surface tension of 10∼25 mN/m on the surface, and
the hollow particles coated with a fluorine-based compound on the surface have a distribution gradient in a film thickness direction.

8. The anti-reflection film according to claim 7, wherein the distribution gradient of the hollow particles increases in a direction away from the base film.

9. A method of manufacturing an anti-reflection film comprising preparing the anti-reflective coating composition according to claim 1;
coating the composition on at least one side of the base film;
drying the coated composition; and
curing the dried composition.

10. The method according to claim 9, wherein the drying is conducted while the composition coated on the base film is phase-separated into one or more layers according to distribution gradient of the hollow particles.

11. The method according to claim 9, wherein the drying is conducted at a temperature of from 5 to 150 °C for 0.1 to 60 minutes.

12. The method according to claim 9, wherein the curing is conducted by heat curing by heat treatment at a temperature of from 20 to 150 °C for 1 to 100 minutes, or by UV curing by UV irradiation at a UV irradiation amount of 0.1 to 2 J/cm² for 1 to 600 seconds.

## Patentansprüche

1. Antireflektive Beschichtungszusammensetzung, welche umfasst:
hohle Teilchen,
hohle Teilchen, die mit einer Verbindung auf Fluorbasis mit einem Brechungsindex von 1,3-1,4 und einer Oberflächenspannung von 10-25 mN/m auf der Oberfläche beschichtet sind, gemessen mit Wasser und Diiodmethan (CH₂I₂) als Referenz, einer Messvorrichtung von KRUSS Co, Tropfenformanalyse DAS 100, auf der Oberfläche, wobei die Verbindung auf Fluorbasis, beschichtet auf der Oberfläche des hohlen Teilchens, wenigstens eine Verbindung ist, die ausgewählt ist aus der Gruppe bestehend aus Tridecafluoroctyltriethoxysilan, Heptadecafluordecyltrimethoxysilan und Heptadecafluordecyltriisopropoxysilan,
eine photopolymerisierbare Verbindung,
einen Photopolymerisationsinitiator und
ein Lösungsmittel.

2. Antireflektive Beschichtungszusammensetzung nach Anspruch 1, wobei die Zusammensetzung umfasst:
1 bis 20 Gewichtsteile der hohlen Teilchen;
1 bis 60 Gewichtsteile der hohlen Teilchen, beschichtet mit der Verbindung auf Fluorbasis auf der Oberfläche;
1 bis 20 Gewichtsteile des Photopolymerisationsinitiators; und
100 bis 500 Gewichtsteile des Lösungsmittels,
basierend auf 100 Gewichtsteilen der photopolymerisierbaren Verbindung.

3. Antireflektive Beschichtungszusammensetzung nach Anspruch 1, wobei das Gewichtsverhältnis der hohlen Teilchen, beschichtet mit der Verbindung auf Fluorbasis auf der Oberfläche, zu den hohlen Teilchen 1:0,1-20 ist.

4. Antireflektive Beschichtungszusammensetzung nach Anspruch 1, wobei der Zahlenmittelteilchendurchmesser der hohlen Teilchen und der hohlen Teilchen, beschichtet mit der Verbindung auf Fluorbasis auf der Oberfläche, 1 bis 200 nm ist.

5. Antireflektive Beschichtungszusammensetzung nach Anspruch 1, wobei das Lösungsmittel eine Dielektrizitätskonstante (25°C) von 20-30 und ein Dipolmoment von 1,7-2,8 aufweist.

6. Antireflektive Beschichtungszusammensetzung nach Anspruch 1, wobei das Lösungsmittel wenigstens eines ist ausgewählt aus der Gruppe bestehend aus Methylethylketon, Ethylacetat, Acetylaceton, Isobutylketon, Methanol, Ethanol, n-Butanol, i-Butanol und t-Butanol.

7. Antireflektiver Film, welcher umfasst:
einen Basisfilm und eine Hartbeschichtungsschicht und eine Schicht mit niedrigem Brechungsindex, gebildet auf dem Basisfilm durch die antireflektive Beschichtungszusammensetzung nach Anspruch 1,
wobei die Schicht mit niedrigem Brechungsindex hohle Teilchen und hohle Teilchen, beschichtet mit einer Verbindung auf Fluorbasis mit einem Brechungsindex von 1,3 1,4 und einer Oberflächenspannung von 10-25 mN/m auf der Oberfläche, umfasst, und
die hohlen Teilchen, beschichtet mit einer Verbindung auf Fluorbasis auf der Oberfläche, einen Verteilungsgradienten in einer Filmdickenrichtung aufweisen.

8. Antireflektiver Film nach Anspruch 7, wobei der Verteilungsgradient der hohlen Teilchen in einer Richtung weg von dem Basisfilm zunimmt.

9. Verfahren zum Herstellen eines antireflektiven Films, umfassend:
Herstellen der antireflektiven Beschichtungszusammensetzung nach Anspruch 1;
Beschichten der Zusammensetzung auf wenigstens einer Seite des Basisfilms;
Trocknen der beschichteten Zusammensetzung; und
Härten der getrockneten Zusammensetzung.

10. Verfahren nach Anspruch 9, wobei das Trocknen durchgeführt wird, während die auf dem Basisfilm beschichtete Zusammensetzung in eine oder mehrere Schichten gemäß dem Verteilungsgradienten der hohlen Teilchen phasen-getrennt wird.

11. Verfahren nach Anspruch 9, wobei das Trocknen bei einer Temperatur von 5 bis 150°C für 0,1 bis 60 Minuten durchgeführt wird.

12. Verfahren nach Anspruch 9, wobei das Härten durch Wärmehärten durch Wärmebehandlung bei einer Temperatur von 20 bis 150°C für 1 bis 100 Minuten oder durch UV-Härten durch UV-Bestrahlung bei einer UV-Bestrahlungsmenge von 0,1 bis 2 J/cm² für 1 bis 600 Sekunden durchgeführt wird.

## Revendications

1. Une composition de revêtement antireflet, comprenant :
des particules creuses,
des particules creuses enduites à la surface par un composé à base de fluor présentant un indice de réflexion compris entre 1,3 et 1,4 et une tension de surface comprise entre 10 et 25 mN/m, mesurée par référence à l'eau et au di-iodure de méthane (CH₂I₂), un dispositif de mesure KRUSS Co., une analyse de la forme des gouttes à la surface DSA100, dans laquelle le composé à base de fluor enduit à la surface de la particule creuse est au moins un composé sélectionné dans le groupe constitué par tridécafluoro octyl triéthoxy silane, heptadécafluoro décyl triméthoxy silane et hétadécafluoro décyl triisopropoxy silane,
un composé photopolyméri sable ;
un amorceur de photopolymérisation ; et
un solvant.

2. La composition de revêtement antireflet selon la revendication 1, dans laquelle la composition comprend :
1 à 20 parties en poids des particules creuses ;
1 à 60 parties en poids des particules creuses enduites du composé à base de fluor à la surface ;
1 à 20 parties en poids de l'amorceur de photopolymérisation ; et
100 à 500 parties en poids du solvant,
sur la base de 100 parties en poids du composé photopolymérisable.

3. La composition de revêtement antireflet selon la revendication 1, dans laquelle le rapport en poids des particules creuses enduites du composé à base de fluor à la surface par rapport aux particules creuses est compris entre 1:0,1 et 20.

4. La composition de revêtement antireflet selon la revendication 1, dans laquelle le diamètre de particule moyen en nombre des particules creuses et des particules creuses enduites du composé à base de fluor à la surface est compris entre 1 et 200 nm.

5. La composition de revêtement antireflet selon la revendication 1, dans laquelle le solvant a une constante diélectrique (25°C) comprise entre 20 et 30 et un moment dipolaire compris entre 1,7 et 2,8.

6. La composition de revêtement antireflet selon la revendication 1, dans laquelle le solvant est au moins un solvant sélectionné dans le groupe constitué par méthyléthylcétone, éthylacétate, acétyl acétone, isobutylcétone, méthanol, éthanol, n-butanol, i-butanol et t-butanol.

7. Un film antireflet comprenant :
un film de base, et une couche de revêtement dur et une couche à faible indice de réflexion formée sur le film de base par la composition de revêtement antireflet selon la revendication 1,
dans laquelle la couche à faible indice de réflexion comprend des particules creuses et des particules creuses enduites d'un composé à base de fluor ayant un indice de réflexion compris entre 1,3 et 1,4 et une tension de surface comprise entre 10 et 25 mN/m à la surface, et
les particules creuses enduites d'un composé à base de fluor à la surface ont un gradient de distribution dans le sens de l'épaisseur du film.

8. Le film antireflet selon la revendication 7, dans lequel le gradient de distribution des particules creuses augmente en s'éloignant du film de base.

9. Un procédé de fabrication d'un film antireflet consistant à :
préparer la composition de revêtement antireflet selon la revendication 1 ;
enduire la composition sur au moins un côté du film de base ;
sécher la composition enduite ; et
durcir la composition séchée.

10. Le procédé selon la revendication 9, dans lequel le séchage est effectué pendant que la composition enduite sur le film de base est à phases séparées en une ou plusieurs couches selon le gradient de distribution des particules creuses.

11. Le procédé selon la revendication 9, dans lequel le séchage est effectué à une température comprise entre 5 et 150°C pendant entre 0,1 et 60 minutes.

12. Le procédé selon la revendication 9, dans lequel le durcissement est effectué par thermodurcissement par un traitement thermique à une température comprise entre 20 et 150°C pendant entre 1 et 100 minutes, ou par durcissement aux UV par exposition aux UV à une quantité de rayons UV comprise entre 0,1 et 2 J/cm² pendant entre 1 et 600 secondes.
